# EUROPEAN PATENT SPECIFICATION

(11) **EP 0 468 619 B1**
(45) Date of publication and mention of the grant of the patent: **08.11.1995**
(21) Application number: 91303890.7
(22) Date of filing: 30.04.1991
(51) Int. Cl.: B65D 75/58, B32B 31/18

(54) **Method for producing laminated film**
Verfahren zur Herstellung eines Verbundfilms
Procédé pour préparer un film laminé

(30) Priority: 23.07.1990 JP 194210/90
(43) Date of publication of application: 29.01.1992
(73) Proprietor: KABUSHIKI KAISHA HOSOKAWA YOKO, Tokyo (JP)
(72) Inventor: Niwa, Susumu, Asaka-shi; Saitama-ken (JP)
(74) Representative: Jackson, Peter Arthur

(56) References cited:
- EP-A- 0 363 540
- FR-A- 2 349 507
- GB-A- 1 185 026
- GB-A- 2 157 652
- US-A- 4 737 393

## Description

The present invention relates to a method for producing a laminated film used for making an easily openable pouch.

In a conventional laminated film material used as a material of an easily openable pouch, in manufacturing the laminated film, a slit extending in a feeding direction, i.e. a running direction, of a plastic film is formed. When producing the pouch, the slit is positioned at an opening line position of a resultant pouch. Thus, known is the pouch cuttable along the slit to thereby easily open the pouch. A pouch of this construction is known from JP UM 59-118743.

According to the laminated film for the easily openable pouch of this kind, the slit extending in the feeding direction is formed in at least one of the plastic films of the laminated film, and the plurality of plastic films are laminated with one another for providing the laminated film.

In a method previously considered by the applicant, but not disclosed, for making the laminated film, the plastic film formed with the slit extending in the feeding direction and one or more other unslit plastic film(s) are laminated with each other. In this lamination step, surface tension is applied to the plastic films so as to avoid generation of wrinkle on the plastic films. The surface tension is applied in the feeding direction of the plastic films as well as in the lateral direction thereof by means of an expander roller. Therefore, the slit formed in the plastic film may be pulled open in the lateral direction. If the slit is excessively opened and such plastic film is wound over a roll, adhesive material may be caused to bulge through the open gap of the stretched slit, to thereby degrade the external appearance of the resultant laminated film. Further, blocking may occur. That is, the adhesive material leaked through the slitted opening may adhere to a newly wound laminated film.

On the other hand, if the slit is excessively narrow and confronting edgelines of the slit are overlapped with each other, stepped portions may be provided at the resultant laminated film. The stepped portion may provide a partly protruded portion when such laminated film is wound over a roll. This protrusion may provide displacement of the laminated film when it is taken up by the roll, or the rolled laminated film may be partly torn by the protrusion.

The present invention has been made in view of the above described drawbacks, and it is an object of the present invention to provide a method for producing a laminated film capable of positioning the slit formed in the plastic film at a given stable position during the lamination process, to thereby overcome the above-described problems.

According to the present invention, there is provided a method for producing a laminated film comprising the steps of preparing a plurality of plastic films; forming intermittently arrayed slits in at least one of the plastic films, the slits extending in running direction of the plastic film and unslitted portions being provided between the neighboring slits at a predetermined interval; and laminating the plurality of the plastic films with one another.

In the accompanying drawings:
Fig. 1 is a side view illustrating a method for producing a laminated film according to the present invention;
Fig. 2 is a view showing slits formed in the plastic film; and
Fig. 3 shows an easily openable pouch produced by the laminated film according to the present invention.

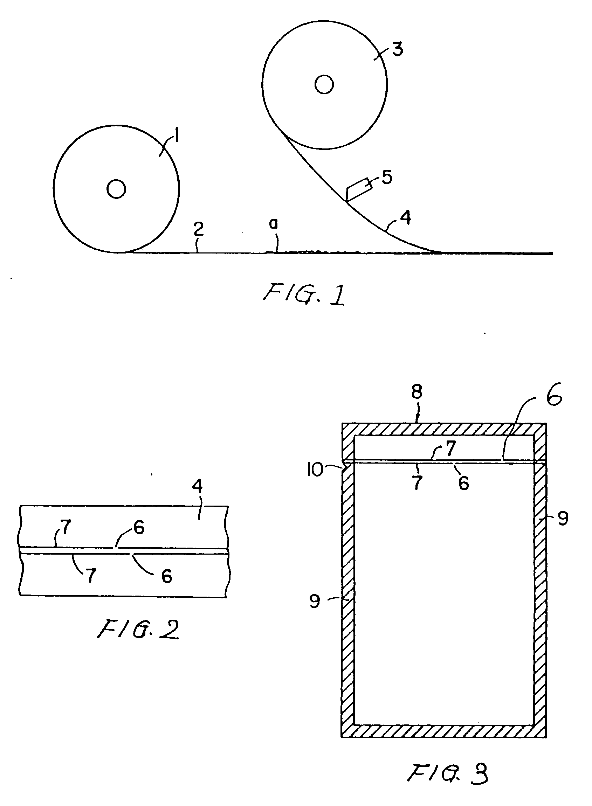

In Fig. 1, a roll 1 of a plastic film 2, and a roll 3 of a plastic film 4 are shown. The roll 3 is positioned in front of the roll 1 in the feeding direction of the plastic films. In front of the roll 3 with respect to the feeding direction, a cutter device 5 is disposed.

A number of the cutter devices 5, corresponding to the number of the easily openable pouches to be produced, are positioned spaced from one another in a transverse (axial) direction of the roll 3. Each of the cutter devices 5 has two cutters spaced away from each other by about 2 mm. By vertically moving the two cutters, intermittent slits 7 extending in the feeding direction are formed in the plastic film 4, the intermittent slits 7 being spaced away from each other by unslit portion 6 which are positioned at a predetermined interval.

The length ratio of the slit 7 and the unslit portion 6 is determined for compliance with the easily openable pouch. For example, if the slit length is in a range of from 100 mm to 200 mm, the unslit length is in the range of 0.1 mm to 0.5 mm. The length of the unslit portion 6 should be extremely small in comparison with the slit length. However, if the unslit length is too small, the unslit portion may be cut due to the tension applied to the plastic film for the purpose of wrinkle elimination during the lamination step, and therefore, the slit may be largely opened. Therefore, the unslit portion should have sufficient length which is capable of providing a sufficient strength in order to avoid the opening of the slit.

More specifically, if the width of a resultant pouch is intended to be about 100 mm, the slit length should be about 100 mm, so as to exclude the two unslit portion in the resultant pouch. No, or at least one unslit portion should exist in the resultant pouch. In other words, if the slit length is less than 100 mm, two unslit portions may exist in the resultant pouch, which may be undesirable for easily opening the resultant pouch. On the other hand, if the slit length is more than 200 mm, the slit portion may be inadvertently opened during a tension application step in order to eliminate the wrinkle of the laminated sheet. Further, if the length of the unslit portion is less than 0.1 mm, the unslit portion may be cut during the tension application step or lamination step owing to the shortage of the strength. On the other hand, if the length of the unslit portion is more than 0.5 mm, it would be difficult to align the slit portions linearly with each other.

In making the laminated film from the two plastic films 2 and 4 so as to produce the easily openable pouch, firstly, the rolls 1 and 3 of the plastic films 2 and 4 are prepared. Then, the plastic film 4 from the roll 3 is subjected to slit formation so as to form the intermittent slits 7 extending in the feeding direction, with the unslit portions 6 between the intermittent slits at predetermined intervals, by means of the cutter device 5 positioned in front of the roll 3 with respect to the feeding direction. The plastic film 4 formed with the intermittent slits 7 is laminated with the plastic film 2 supplied from the roll 1 by means of an adhesive agent a.

In the laminated film, the thus provided unslit portions 6 can withstand tension applied to the plastic film for wrinkle elimination at the time of the lamination process, without the slits opening.

The easily openable pouch produced by the above described laminated film is shown in Fig. 3. The pouch 8 includes multi-layer films containing the above described laminated film. In this case, a notch 10 (triangular notch 10 is shown in the illustrated embodiment) is formed at an edge side heat seal portion 9 of the pouch 8. A tip portion of the notch 10 may be aligned with the slit 7. Alternatively, the notch 10 is positioned slightly lower than the slit 7 as shown in Fig. 3 for facilitating the opening of the pouch. That is, when opening the pouch, a user grips the upper marginal portion of the pouch, and pulls the upper marginal portion upwardly. Therefore, the upward tearing can easily reach the slit portion 7 positioned immediately above the tip end portion of the notch 10, and thereafter, the tearing can be made along the slit 7.

Incidentally, in the above described embodiment, two arrays of the slits are formed on the plastic film. However, a single array or not less than two arrays of slits can be formed. In case of the two array arrangement, the positions of the unslit portions 6, 6 are preferably offset from each other. The offset arrangement is advantageous in minimizing the opening of the slit portions during the laminated film manufacture.

Incidentally, in the above described embodiment, two plastic films are used for the laminated film. However, not less than two plastic films can be used for the laminated film. In this case, the plastic film formed with the slits is preferably positioned in an intermediate layer. For example, the laminated film includes a biaxially oriented polyester film having a thickness of about 12 microns, a biaxially oriented nylon film having a thickness of 15 microns and formed on the polyester film, an aluminum foil having a thickness of 7 microns formed on the nylon film, and non-oriented polypropylene having a thickness of 70 microns formed on the aluminum foil. Neighboring films are joined with each other by adhesive materials (DL). In this case, the nylon film undergoes the slitting process.

As described above according to the present invention, at least one of the plastic films of the plurality of the plastic films is formed with slits extending in the feeding direction with unslit portion therebetween at predetermined intervals, and the plurality of plastic films are laminated with one another. Therefore, the slits on the plastic film can provide a predetermined space in the lateral direction thereof even if the plastic film is meanderingly fed during the lamination process. Further, at the time of the lamination, the slit is not opened due to the tension applied to the plastic film for the purpose of wrinkle elimination.

## Claims

1. A method of producing a laminated film including the steps of preparing a plurality of plastic films (2,4), and laminating the plastic films with one another to provide the laminated film, characterised by the steps of:
prior to the laminating step, forming intermittently arranged slits (7) in at least one of the plastic films, the slits extending in the feeding direction of the plastic film and unslit portions (6) being provided between the neighbouring slits at predetermined intervals.

2. A method according to claim 1, wherein the length of each of the unslit portions (6) is in a range of from 0.1 to 0.5 mm.

3. A method according to claim 1 or claim 2, wherein the length of each of the slits (7) is in a range of from 100 to 200 mm.

4. A method according to any of the preceding claims, wherein a plurality of arrays of intermittently arranged slits (7) are formed side by side.

5. A method according to claim 4, wherein unslit portions (6) of one of the plurality of arrays of the intermittently arranged slits are positioned offset from unslit portions (6) of another one of the plurality of arrays of the intermittently arranged slits.

6. An easily openable pouch (8) having one wall formed by a laminated film which has been made by a method according to any one of the preceding claims, with the slit or slits (7) extending across the pouch to provide a tear line for opening the pouch.

7. A pouch according to claim 6, wherein a notch (10) is formed in an edge seal portion (9) adjacent to an end of the slit(s).

## Patentansprüche

1. Verfahren zur Herstellung einer Verbundfolie, umfassend die Schritte des Herstellens einer Mehrzahl plastischer Folien (2,4) und des Laminierens der plastischen Folien miteinander, um die Verbundfolie bereitzustellen, **gekennzeichnet** durch die Schritte:
Formen intermittierend angeordneter Schlitze (7) in wenigstens einer der plastischen Folien vor dem Laminierschritt, wobei sich die Schlitze in Zuführrichtung der plastischen Folie erstrecken und ungeschlitzte Abschnitte (6) zwischen den benachbarten Schlitzen in vorbestimmten Intervallen vorgesehen sind.

2. Ein Verfahren nach Anspruch 1, bei dem die Länge jedes ungeschlitzten Abschnittes (6) im Bereich von 0,1 bis 0,5 mm liegt.

3. Ein Verfahren nach Anspruch 1 oder 2, bei dem die Länge jedes Schlitzes (7) im Bereich von 100 bis 200 mm liegt.

4. Ein Verfahren nach einem der vorangehenden Ansprüche, bei dem mehrere Gruppierungen intermittierend angeordneter Schlitze (7) nebeneinander ausgebildet sind.

5. Ein Verfahren nach Anspruch 4, bei dem ungeschlitzte Abschnitte (6) einer der mehreren Gruppierungen der intermittierend angeordneten Schlitze versetzt von ungeschlitzten Abschnitten (6) einer anderen der mehreren Gruppierungen der intermittierend angeordneten Schlitze angeordnet sind.

6. Eine leicht zu öffnende Tasche (8), die eine aus einer Verbundfolie, die durch ein Verfahren nach einem der vorangehenden Ansprüche erzeugt worden ist, gebildete Wandung aufweist, wobei sich der Schlitz oder die Schlitze (7) über die Tasche erstrecken, um eine Reißlinie zum Öffnen der Tasche vorzusehen.

7. Eine Tasche nach Anspruch 6, bei der eine Kerbe (10) in einem Randabdichtungsabschnitt (9) benachbart zu einem Ende der/s Schlitze(s) ausgebildet ist.

## Revendications

1. Procédé de production d'un film stratifié incluant les étapes consistant à préparer une série de couches plastiques (2, 4), et à stratifier les couches plastiques entre elles de façon à réaliser le film stratifié, caractérisé par les étapes consistant à:
ménager, avant l'étape de stratification, des fentes (7) agencées de façon intermittente dans au moins l'une des couches plastiques, les fentes s'étendant dans la direction d'alimentation de la couche plastique et des parties (6) sans fente étant disposées à intervalles prédéterminés entre les fentes voisines.

2. Procédé selon la revendication 1, dans lequel la longueur de chacune des parties (6) sans fente est dans une plage comprise entre 0,1 et 0,5 mm.

3. Procédé selon la revendication 1 ou la revendication 2, dans lequel la longueur de chacune des fentes (7) est dans une plage comprise entre 100 et 200 mm.

4. Procédé selon l'une quelconque des revendications précédentes, dans lequel est formée une série de réseaux, disposés côte à côte, de fentes (7) agencées de façon intermittente.

5. Procédé selon la revendication 4, dans lequel des parties (6) sans fente, de l'un des réseaux de la série de réseaux de fentes agencées de façon intermittente, sont disposées en étant décalées par rapport à des parties (6) sans fente d'un autre des réseaux de la série de réseaux de fentes agencées de façon intermittente.

6. Poche à ouverture facile (8) dont une paroi est formée d'un film stratifié qui a été produit par le procédé selon l'une quelconque des revendications précédentes, la fente ou les fentes (7) s'étendant en travers de la poche afin de réaliser une ligne de déchirure pour ouvrir la poche.

7. Poche selon la revendication 6, dans laquelle une encoche (10) est ménagée dans une partie (9) de fermeture étanche de bord, adjacente à une extrémité de la fente ou des fentes.
